(19) 

**Europäisches Patentamt**
**European Patent Office**
**Office européen des brevets**

(11) **EP 4 435 930 A2**

(12) **EUROPEAN PATENT APPLICATION**

(43) Date of publication:
25.09.2024 Bulletin 2024/39

(21) Application number: 24158957.1

(22) Date of filing: 21.02.2024

(51) International Patent Classification (IPC):
*H01M 10/48* (2006.01) *G01H 5/00* (2006.01)

(52) Cooperative Patent Classification (CPC):
**H01M 10/48; G01H 5/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.03.2023 IN 202311020377**

(71) Applicant: **Life Safety Distribution GmbH**
**1180 Rolle (CH)**

(72) Inventors:
• **KUMAR, Nirmal A**
**Charlotte, 28202 (US)**
• **MCCOLLUM, David R.**
**Charlotte, 28202 (US)**

(74) Representative: **Haseltine Lake Kempner LLP**
**Cheapside House**
**138 Cheapside**
**London EC2V 6BJ (GB)**

(54) **SYSTEM, METHOD, AND COMPUTER PROGRAM PRODUCT FOR DETECTING THE ONSET OF THERMAL RUNAWAY USING AN ULTRASONIC SENSOR**

(57) A system, method, and computer program product for utilizing an ultrasonic sensor compensating for the physical conditions of an internal battery compartment (e.g., temperature and/or humidity), to detect a hazardous battery condition, is provided. An example system includes a battery case defining an internal battery compartment and one or more battery cells contained in the internal battery compartment. The example system further includes an acoustic transmitter disposed within the internal battery compartment and configured to transmit an acoustic signal. In addition, the example system includes an acoustic receiver also disposed within the internal battery compartment and positioned to receive the transmitted acoustic signal. The example system monitors the time of flight of the acoustic signal and detects the hazardous battery condition of the one or more battery cells based on a change in the time of flight of the acoustic signal.

FIG. 2

EP 4 435 930 A2

## Description

## TECHNOLOGICAL FIELD

Embodiments of the present disclosure relate generally to systems, methods, and computer program products for detecting thermal runaway in a battery pack, and more particularly, to detecting the onset of thermal runaway using an ultrasonic sensor placed within an internal battery compartment.

## BACKGROUND

Applicant has identified many technical challenges and difficulties associated with detecting the onset of thermal runaway in the early stages. Through applied effort, ingenuity, and innovation, Applicant has solved problems related to detecting the onset of thermal runaway, which are described in detail below.

## BRIEF SUMMARY

Various embodiments are directed to an example system, method, and computer program product for utilizing an ultrasonic sensor to detect the onset of thermal runaway in a battery pack.

In accordance with some embodiments of the present disclosure, an example system for detecting a hazardous battery condition is provided. In some embodiments, the example system may comprise a battery case defining an internal battery compartment, the internal battery compartment comprising a battery cell. The example system may further comprise an acoustic transmitter disposed within the internal battery compartment and configured to transmit an acoustic signal. The example system may further comprise an acoustic receiver disposed within the internal battery compartment and positioned to receive the acoustic signal. In some embodiments, the hazardous battery condition may be determined based on a change in a time of flight of the acoustic signal.

In some embodiments, the time of flight of the acoustic signal may be reduced due to the presence of an emitted gas from the battery cell in the internal battery compartment.

In some embodiments, the emitted gas may be hydrogen gas.

In some embodiments, the hazardous battery condition may be thermal runaway.

In some embodiments, the hazardous battery condition may be determined based on a rate of change of the time of flight of the acoustic signal.

In some embodiments, the hazardous battery condition may be determined in an instance in which the rate of change of the time of flight of the acoustic signal exceeds a pre-determined max rate of velocity change threshold.

In some embodiments, the system may further comprise a sensing device, wherein the sensing device is positioned within the internal battery compartment to measure a physical condition of the internal battery compartment, and wherein an expected time of flight of the acoustic signal is adjusted based on the physical condition of the internal battery compartment.

In some embodiments, the sensing device may comprise at least one of a temperature sensor and a humidity sensor.

In some embodiments, the acoustic signal may be an ultrasonic pulse.

In some embodiments, the acoustic transmitter may be positioned to transmit the acoustic signal at a reflecting wall of the internal battery compartment and the acoustic receiver may be positioned to receive the acoustic signal once it has reflected off one or more walls of the internal battery compartment.

In some embodiments, the system may further comprise a microcontroller configured to monitor the change in time of flight of the acoustic signal, electrically connected to the acoustic transmitter and the acoustic receiver.

An example method for utilizing an acoustic signal to detect a hazardous battery condition is further provided. The example method may comprise causing an acoustic transmitter, disposed within an internal battery compartment of a battery case and comprising a battery cell, to transmit an acoustic signal. The example method may further comprise receiving, from an acoustic receiver disposed within the internal battery compartment, an electrical output representing the acoustic signal. In addition, the example method may comprise determining a time of flight of the acoustic signal. Further, the example method may comprise determining the hazardous battery condition based on a change in the time of flight of the acoustic signal.

In some embodiments, the time of flight of the acoustic signal may be reduced due to the presence of an emitted gas from the battery cell in the internal battery compartment.

In some embodiments, the emitted gas may be hydrogen gas.

In some embodiments, the hazardous battery condition may be thermal runaway.

In some embodiments, the hazardous battery condition may be identified in an instance in which the rate of change of the time of flight of the acoustic signal exceeds a pre-determined max rate of velocity change threshold.

In some embodiments, the method may further comprise retrieving from a sensing device a measurement, indicating a physical condition of the internal battery compartment, and adjusting an expected time of flight of the acoustic signal based on the physical condition of the internal battery compartment.

In some embodiments, the sensing device may comprise at least one of a temperature sensor and a humidity sensor.

In some embodiments, the acoustic transmitter may be positioned to transmit the acoustic signal at a reflecting wall of the internal battery compartment and the acoustic receiver may be positioned to receive the acoustic signal once it has reflected off one or more walls of the internal battery compartment.

An example computer program product for utilizing an acoustic sensor to detect a hazardous battery condition is further provided. The example computer program product may comprise at least one non-transitory computer-readable storage medium having computer-readable program code portions stored therein, the computer-readable program code portions comprising an executable portion configured to cause an acoustic transmitter, disposed within an internal battery compartment of a battery case and further comprising a battery cell, to transmit an acoustic signal. In some embodiments, the computer-readable program code portions may comprise an executable portion further configured to receive, from an acoustic receiver disposed within the internal battery compartment, an electrical output representing the acoustic signal. In addition, in some embodiments, the computer-readable program code portions may comprise an executable portion further configured to determine a time of flight of the acoustic signal. Further, in some embodiments, the computer-readable program code portions may comprise an executable portion further configured to determine the hazardous battery condition based on a change in the time of flight of the acoustic signal.

## BRIEF DESCRIPTION OF THE DRAWINGS

Reference will now be made to the accompanying drawings. The components illustrated in the figures may or may not be present in certain embodiments described herein. Some embodiments may include fewer (or more) components than those shown in the figures in accordance with an example embodiment of the present disclosure.

FIG. 1 illustrates an example thermal runaway progression in accordance with an example embodiment of the present disclosure.
FIG. 2 depicts an example battery pack including an ultrasonic sensor in accordance with an example embodiment of the present disclosure.
FIG. 3 depicts another example battery pack further including a temperature sensor and processor in accordance with an example embodiment of the present disclosure.
FIG. 4 illustrates an example block diagram showing example components of an example microcontroller in accordance with an example embodiment of the present disclosure.
FIG. 5 depicts an example flowchart of an example method for detecting thermal runaway in a battery pack using an ultrasonic sensor in accordance with an example embodiment of the present disclosure.

FIG. 6 depicts an example flowchart of an example method for detecting thermal runaway in a battery pack using the change in time of flight of an ultrasonic signal in accordance with an example embodiment of the present disclosure.
FIG. 7 depicts an example flowchart of an example method for detecting thermal runaway in a battery pack using a rate of change in the velocity of an ultrasonic signal in accordance with an example embodiment of the present disclosure.
FIG. 8 illustrates the velocity and the rate of change of the velocity of an example ultrasonic signal in a battery pack experiencing thermal runaway in accordance with an example embodiment of the present disclosure.

## DETAILED DESCRIPTION

Example embodiments will be described more fully hereinafter with reference to the accompanying drawings, in which some, but not all embodiments of the inventions of the disclosure are shown. Indeed, embodiments of the disclosure may be embodied in many different forms and should not be construed as limited to the embodiments set forth herein; rather, these embodiments are provided so that this disclosure will satisfy applicable legal requirements. Like numbers refer to like elements throughout.

Various example embodiments address technical problems associated with determining the onset of a thermal runaway event. As understood by those of skill in the field to which the present disclosure pertains, there are numerous scenarios in which it may be advantageous to detect thermal runaway in its early stages, providing opportunity to mitigate the hazardous condition before the thermal runaway becomes irreversible.

In general, batteries (e.g., lithium-ion batteries, lithium-polymer batteries, etc.) may undergo a chemical reaction within a battery cell to supply power to various devices. Devices requiring substantial amounts of power, such as electric vehicles, may contain tens or even hundreds of battery cells in a battery pack.

Battery cells utilizing chemical reactions to generate power may be susceptible to a number of hazardous conditions. One example hazardous battery cell condition that may result from various forms of stress and/or abuse is thermal runaway. In certain circumstances, the movement of electrons and lithium ions in the battery cell may produce heat faster than the battery pack can dissipate the generated heat. Once the internal temperature of the battery cell reaches a certain point, the temperature of the battery cell may rise uncontrollably until the battery cell combusts. Not only can this hazardous condition occur in an individual battery cell but thermal runaway can cause an uncontrollable rise in temperature in the battery cells commonly contained within a battery pack, causing neighboring battery cells to also enter into thermal runaway. Eventually, a battery cell and/or battery pack, may combust causing an extremely hazardous condition. A battery cell may progress through the stages of thermal runaway rapidly, providing little time to detect and mitigate the hazardous condition before the chain reaction is irreversible.

In some instances, the stress and abuse of the battery cells resulting in thermal runaway may be immediate and apparent. For example, a battery cell on an electric vehicle may be punctured or ruptured by flying debris, leading to a thermal runaway event. In other instances, long-term abuse of a battery cell or cells over an extended period of time may lead to thermal runaway. Overcharging, over-discharging, exposure to high and low temperatures, impacts to the battery pack, and/or physical damage to the battery cells, may all affect the internal operation of the battery cells, especially when the abuse occurs over an extended period of time. In some instances, mechanical abuse, such as a crushing force on a battery cell may lead to an internal short circuit. A short circuit may in turn increase the internal heat in the battery cell triggering a thermal runaway condition. In some instances, chronic overcharging and/or discharging may lead to plating and the formation of dendrites, which may subsequently cause short circuits. In addition, in some instances, the chemical properties of the chemicals within the battery cell may slowly change over time due to mechanical, thermal, and electrical abuses. Due to the concealed nature of many of these factors, along with the long-term effects, and sudden onset of thermal runaway, it can be difficult to predict and/or detect a thermal runaway event before it is too late.

Current battery management systems may utilize various sensors in close proximity to the battery cells to determine the condition of the battery cell based on the physical characteristics around the battery cell. For example, a temperature sensor may be placed on or near the surface of the battery cell. When the temperature measurement exceeds a pre-determined max operating temperature, the battery management system may issue a warning or alert. Similarly, a pressure sensor may be placed near the battery cells, configured to detect an increase in pressure within the battery pack. Once an increase in pressure or temperature is detected, the battery management system may issue an alert indicating the presence of the hazardous battery condition, such as thermal runaway.

However, in many instances, these battery management systems do not issue warnings until the hazardous battery condition has progressed too far. For example, temperature sensors outside of the battery cells may not detect an increase in temperature outside of the battery cells until after the interior temperature of the battery cell is already rising at an irreversible rate. Similarly, an increase in pressure inside the battery pack may not be detected until after the battery cells have released internal gases and the temperature is rising uncontrollably. In addition, due to the chain-reaction nature of a thermal runaway event, once the thermal runaway event has started, it cannot be stopped. As such, in some instances the battery cell will continue to overheat and eventually combust even after the condition is detected and the warning issued. Additionally, the overheating and combustion from a single battery cell may propagate to adjacent battery cells, in some instances leading to a battery pack explosion.

The various example embodiments described herein utilize various techniques to detect thermal runaway in a battery pack in the early stages, while mitigating actions to stop the progression of thermal runaway may still be performed. For example, before a battery cell enters into the irreversible phase of thermal runaway, certain gases are emitted during the first venting stage. Among the emitted gases is hydrogen gas. One physical property of hydrogen gas is that it has a higher speed of sound compared to air at the same temperature and pressure. Thus, an acoustic signal will travel faster when hydrogen is present in an internal battery compartment than when there is only air in the internal battery compartment. The embodiments described herein enable a thermal runaway detection system to detect the presence of hydrogen gas during the first venting stage, enabling a battery management system to stop the progression of thermal runway before it is irreversible.

For example, in some embodiments, the thermal runaway detection system may include an acoustic transmitter and an acoustic receiver placed within an internal battery compartment of the battery pack. The acoustic transmitter may periodically transmit an acoustic signal or chirp that is received by the acoustic receiver. The thermal runaway detection system may further include a processor or microcontroller configured to record the time the acoustic signal is transmitted by the acoustic transmitter and the time the acoustic signal is received by the acoustic receiver and thus determine the time of flight of the acoustic signal. By monitoring the time of flight of the acoustic signal within the internal battery compartment, the thermal runaway detection system may identify an increase in the speed of the acoustic signal within the internal battery compartment due to the presence of hydrogen gas. The presence of hydrogen gas in the internal battery compartment of a battery pack may be a key indicator of the onset of thermal runaway.

In addition, in some embodiments, a thermal runaway detection system as described herein may further include a temperature sensor within the internal battery compartment of a battery pack. By retrieving measurements from the temperature sensor, the thermal runaway detection system may distinguish changes in the speed of the acoustic signal due to a change in temperature. Further, the thermal runaway detection system may adjust the expected time of flight of the acoustic signal based on the temperature within the internal battery compartment of the battery pack.

In some embodiments, the thermal runaway detection system may identify the presence of hydrogen gas within the internal battery compartment of a battery pack based on the rate of change of the velocity, or the change in time of flight over time, of the acoustic signal. As hydrogen gas begins to fill the internal battery compartment of the battery pack, the speed of the acoustic signal may rapidly increase over a short period of time, before settling at a near constant increased speed. Such a change in speed over time, may be detectable by a thermal runaway detection system. For example, a thermal runaway detection system may monitor the rate of change of the velocity of the acoustic signal during operation. In an instance in which the rate of change of the velocity of the acoustic signal exceeds a max rate of velocity change threshold, the thermal runaway detection system may determine that hydrogen gas is present in the internal battery compartment of the battery pack and the onset of thermal runaway has begun.

As a result of the herein described example embodiments and in some examples, the effectiveness of a thermal runaway detection system may be greatly improved. By detecting hydrogen gas via an acoustic sensor and placing the acoustic sensor directly in the internal battery compartment of a battery pack, the speed with which the onset of thermal runaway is detected may be further enhanced, increasing the opportunity to mitigate the onset of thermal runaway before the hazardous condition becomes irreversible.

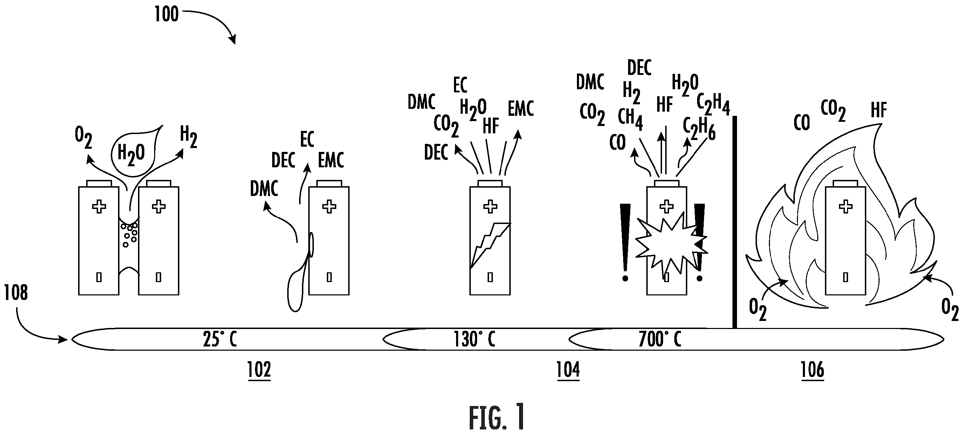

Referring now to FIG. 1, a chart illustrating an example thermal runaway progression 100 in a battery cell is provided. As depicted in FIG. 1, the example thermal runaway progression 100 comprises three stages: off-gas generation stage 102, smoke generation stage 104, and fire generation stage 106. Each stage of the thermal runaway progression 100 is associated with a certain temperature or range of temperatures within the battery cell, as shown by the temperature scale 108. In addition, each stage of the thermal runaway progression 100 may be associated with a certain pressure or range of pressures within the battery compartment, as well as other characteristics such as the presence of certain gases. In general, during the off-gas generation stage 102, although the battery cell may be irreversibly damaged, the progression of thermal runaway can be stopped if mitigating actions are taken. Once a battery enters the smoke generation stage 104, the onset of thermal runaway is likely irreversible.

As depicted in FIG. 1, the first stage of the example thermal runaway progression 100 is the off-gas generation stage 102. During the off-gas generation stage 102, the electrolyte between the anode and cathode of the battery cell, begins to break down. The off-gas generation stage 102 is characterized by elevated gas levels, specifically elevated gas levels of oxygen and hydrogen. The operating temperature and the pressure readings initially remain constant, in a normal operating range for the battery cell and the environment during the off-gas generation stage 102. For example, the operating temperature may be between 20°C and 80°C, while the pressure may remain below about 14.7 pounds per square inch.

As further depicted in FIG. 1, as the off-gas generation stage 102 progresses, the electrolyte between the anode and cathode within the battery cells fully breaks down. Such electrolyte vaporization may be characterized by a slight elevation in the internal pressure of the battery cell. The slight elevation in pressure may trigger the transfer of gas through the porous membranes of the one or more battery vents, equalizing the pressure within the battery compartment. Electrolyte vaporization may also be characterized by a slight increase in temperature, for example, between 80°C and 100°C and the presence of distinct gases, for example, elevated levels of Hydrogen ($H_2$), ethylene carbonate (EC), dimethyl carbonate (DMC), diethyl carbonate (DEC), and/or ethyl methyl carbonate (EMC).

As further depicted in FIG. 1, the second stage of the example thermal runaway progression 100 is the smoke generation stage 104. During the smoke generation stage 104, the buildup of gas due to the decomposition of the electrolyte inside the battery cell may cause a drastic increase in the internal pressure of the interior battery compartment, leading to deformations in the casing of the battery cell and eventually the rupture of the porous membranes of the one or more battery vents disposed in the wall of the battery case. The rupture of the porous membrane may allow gases within the battery compartment to exit, alleviating some of the built up pressure within the battery compartment, at least momentarily. First venting may be characterized by an internal pressure in the internal battery compartment of a battery pack above 14.7 pounds per square inch, with rupture of the porous membrane, in some embodiments, occurring around 21 pounds per square inch. The smoke generation stage 104 may additionally be characterized by an initial increase in temperature, for example, between 120°C and 300°C along with elevated gas levels of $H_2$, EC, DMC, DEC, EMC, and carbon dioxide.

As further depicted in FIG. 1, as the smoke generation stage 104, catastrophic failure of the battery pack becomes imminent. During the later portions of the smoke generation stage 104, chemical reactions within the battery cells continue due to a continued increase in temperature causing a severe and sudden increase of temperature. In an instance in which a plurality of battery cells are in close proximity, the chain reaction of chemical reactions and increased temperatures may spread to neighboring battery cells. The later portions of the smoke generation stage 104 as depicted in FIG. 1, may be characterized by the presence of smoke within the internal battery compartment and around the battery pack. The smoke generation stage 104 may be further characterized by continuing elevated gas levels of $H_2$, EC, DMC, DEC, EMC, methane, carbon monoxide, ethanol, and carbon dioxide. In some embodiments, the smoke generation stage 104 may be characterized by a temperature at or exceeding 300°C and less than 800°C.

As further depicted in FIG. 1, the final stage of the example thermal runaway progression is the fire generation stage 106. During the fire generation stage 106 a battery may catch fire and/or explode creating an extremely hazardous situation. During the fire generation stage 106 the temperature of the battery cell may exceed 800°C. The uncontrolled combustion during the fire generation stage 106 is extremely hazardous to the operating device and any people and objects in close proximity.

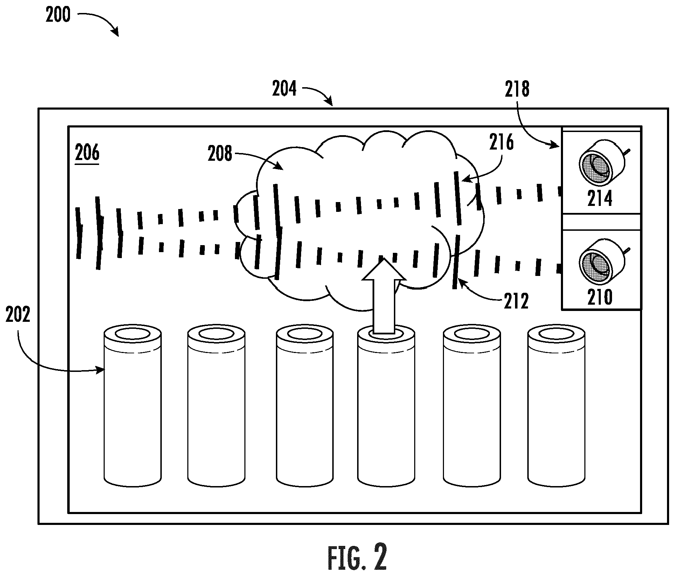

Referring now to FIG. 2, an example thermal runaway detection system 200 is provided. As shown in FIG. 2, the example thermal runaway detection system 200 includes a battery pack 204 defining an internal battery compartment 206, the internal battery compartment 206 containing a plurality of battery cells 202. As further depicted in FIG. 2, an acoustic sensor 218 comprising an acoustic transmitter 210 and an acoustic receiver 214 are positioned within the internal battery compartment 206, such that a transmitted acoustic signal 212 transmitted by the acoustic transmitter 210 is received by the acoustic receiver 214 as a received acoustic signal 216. Additionally, as shown in FIG. 2, the internal battery compartment 206 includes one or more emitted gases 208 through which the transmitted acoustic signal 212 propagates.

As depicted in FIG. 2, the example thermal runaway detection system 200 includes a battery pack 204 defining an internal battery compartment 206. A battery pack 204 may be any structure, packaging, housing, and/or compartment enclosing and/or protecting the plurality of battery cells 202. The battery pack 204 may further define a space or compartment (e.g., internal battery compartment 206) into which the internal battery components, such as the battery cells 202 and the acoustic sensor 218, may be disposed. In some embodiments, the battery pack 204 may comprise aluminum, steel, or other metals; plastics and/or reinforced plastics; or any other material capable of protecting the interior components and one or more battery cells 202 of the thermal runaway detection system 200. In some embodiments, the battery pack 204 may be manufactured to conform with an industry standard, such as IP67. In some embodiments, the battery pack 204 may provide structures to support, attach, and/or separate the battery cells 202, as well as wiring, and/or other internal components of the thermal runaway detection system 200. Many electric vehicles today have begun arranging large numbers of battery cells 202 into a battery pack 204 that is integrated as part of the body of the electric vehicle. This technology has largely come to be known as cell-to-chassis technology. Such a battery arrangement may be particularly prone to thermal runaway and eventual combustion as a result of mechanical, electrical and/or thermal stress and abuse.

As further depicted in FIG. 2, the example battery pack 204 includes a plurality of battery enclosure walls (e.g., reflecting walls). The battery pack 204 may consist of one or more battery enclosure walls. As described herein, the battery enclosure walls may comprise aluminum, steel, or other metals; plastics and/or reinforced plastics; or any other material capable of protecting the interior components and one or more battery cells 202. In some embodiments, the acoustic transmitter 210 may generate a transmitted acoustic signal 212 directed at one or more of the battery enclosure walls. The battery enclosure walls may be configured to reflect the transmitted acoustic signal 212 toward an acoustic receiver 214. In some embodiments, the battery enclosure walls may further provide attachment structures, cavities, openings, or other devices to attach sensing devices, battery vents, or other devices in support of the management of the thermal runaway detection system 200 and included components.

As further depicted in FIG. 2, the example thermal runaway detection system 200 includes a plurality of battery cells 202 within the internal battery compartment 206 of the battery pack 204. While depicted as a plurality of battery cells 202, the disclosure is not limited to a plurality of battery cells 202 as some embodiments may include a single battery cell. The battery cells 202 may take many forms, including but not limited to cylindrical cells, prismatic cells, pouch cells, etc. The battery cells 202 may be attached and/or separated by structures defined in the battery pack 204. Additionally, the battery cells 202 may be electrically connected in parallel and/or series to provide an accumulated power output to the operating device (e.g., an electric vehicle). Each battery cell 202 may house chemical components which undergo a chemical process to generate electrical current. The chemical components of the battery cells 202 may comprise numerous compositions, for example, lithium-ion, lithium-polymer, lithium-ion phosphate, lithium sulfur, and other lithium based compositions; nickel manganese cobalt; nickel metal hydride; lead acid; or any other chemical composition capable of providing sufficient electrical current through a chemical process. Devices requiring substantial amounts of power, such as electric vehicles, may contain tens or even hundreds of battery cells 202 encased in a battery pack 204. The chemical reactions occurring in these battery cells 202 may be susceptible to dangerous battery conditions, such as thermal runaway.

As further depicted in FIG. 2, when a battery cell 202 experiences an increase in internal pressure due, for example, to a thermal runaway event, the battery cell 202 may release gases (e.g., emitted gases 208) into the surrounding environment (e.g., internal battery compartment 206). Internal pressure may build in a battery cell 202, due to a deteriorating separator layer, electrolyte degradation, increased heat due to a short circuit, and many other factors. In some embodiments, a battery cell 202 may include a safety vent to release gases (e.g., emitted gases 208) if the internal pressure of the battery cell 202 exceeds a maximum internal pressure. Emitted gases 208 may include a variety of gases depending upon the cause for venting.

Some emitted gases 208 may indicate that thermal runaway is or is about to occur, for example, the presence of hydrogen gas ($H_2$). An emitted gas 208 may be any gas released into the internal battery compartment 206 during the off-gas generation stage 102 of thermal runaway as explained in relation to FIG. 1. Emitted gases 208 may include gases emitted due to chemical reactions occurring within the battery cell 202, gases released during the degradation of a battery cell 202 component, such as the separator layer, gases resulting from the evaporation of certain substances due to heat, etc. In some examples, an emitted gas 208 may be an abnormal or elevated level of an otherwise common gas, such as oxygen or hydrogen. In some embodiments, the emitted gases may contain a VOC, including, for example, dimethyl carbonate (DMC), diethyl carbonate (DEC), and/or ethyl methyl carbonate (EMC) methane.

As further described herein, some emitted gases 208 may alter the speed of sound in the internal battery compartment 206. For example, the presence of hydrogen gas ($H_2$) may increase the speed of sound in an environment, such as the internal battery compartment 206. In general, hydrogen gas has a lower density than air, meaning the presence of hydrogen gas reduces the overall density of the air. As a result, the speed of sound in air increases when hydrogen gas is present as the sound waves can travel more easily through a less dense medium. To illustrate, the speed of sound in air at room temperature (20°C) and pressure (1 atmosphere) is 343 meters per second. In contrast, the speed of sound in hydrogen gas at room temperature (20°C) and pressure (1 atmosphere) is 1,268 meters per second. The increased speed of sound results in a decreased time of flight of an acoustic signal across a fixed distance.

As further depicted in FIG. 2, the example thermal runaway detection system 200 includes an acoustic sensor 218 positioned in the internal battery compartment 206. An acoustic sensor 218 may be any electronic or electro-mechanical device capable of transmitting and/or receiving acoustic signals. Although depicted in FIG. 2 including an acoustic transmitter 210 and an acoustic receiver 214 in some embodiments an acoustic sensor 218 may comprise only an acoustic transmitter 210 or an acoustic receiver 214.

As further depicted in FIG. 2, the example thermal runaway detection system 200 includes an acoustic transmitter 210. An acoustic transmitter 210 may be any electronic or electro-mechanical device configured to transmit sound waves (e.g., transmitted acoustic signal 212). In general, an acoustic transmitter 210 may generate sound waves utilizing a transducer to convert electrical energy into sound waves. The frequency of the generated sound wave may be dependent on the properties of the transducer, as well as the properties of the electrical energy provided to the transducer. In some embodiments, the acoustic transmitter 210 may be configured to produce ultrasonic waves, for example, acoustic signals having a frequency above 20 kHz. Ultrasonic waves may enable highly accurate readings at high speeds, reducing the latency between off-gas generation and the determination of the onset of thermal runaway. In some embodiments, an ultrasonic pulse or short ultrasonic transmission may be generated by the acoustic transmitter 210.

As further depicted in FIG. 2, the example thermal runaway detection system 200 includes an acoustic receiver 214. An acoustic receiver 214 may be any electronic or electro-mechanical device configured to receive sound waves (e.g., received acoustic signal 216) and convert the received sound wave into an analog or digital electric signal representing the sound wave an capable of being decoded. In some embodiments, an acoustic receiver 214 may measure one or more physical characteristics of a received acoustic signal 216, such as the amplitude of the acoustic signal, the frequency of the acoustic signal, the wavelength, the time period, the velocity, or other similar physical characteristic. The received acoustic signal 216 in the internal battery compartment 206 may be used to determine an instance in which the battery cells 202 are experiencing venting, such as venting that occurs in the off-gas generation stage 102 of the thermal runaway progression 100. In some embodiments, the received acoustic signal 216 may be a reflection of the transmitted acoustic signal 212 after reflecting off one or more walls of the battery pack 204. In some embodiments, the received acoustic signal 216 may be received at the acoustic receiver 214 having a direct line of sight to the acoustic transmitter 210. In some embodiments, a transmitted acoustic signal 212 may be reflected off one or more walls of the battery pack 204 to increase the distance between the acoustic signal (e.g., transmitted acoustic signal 212) transmitted by the acoustic transmitter 210. An increase in distance between the acoustic transmitter 210 and the acoustic receiver 214 may improve the accuracy of the acoustic sensor 218 when utilizing ultrasonic acoustic signals. In addition, although a single acoustic receiver 214 is depicted in the example embodiment of FIG. 2, a plurality of acoustic receivers 214 may be utilized as part of the thermal runaway detection system 200.

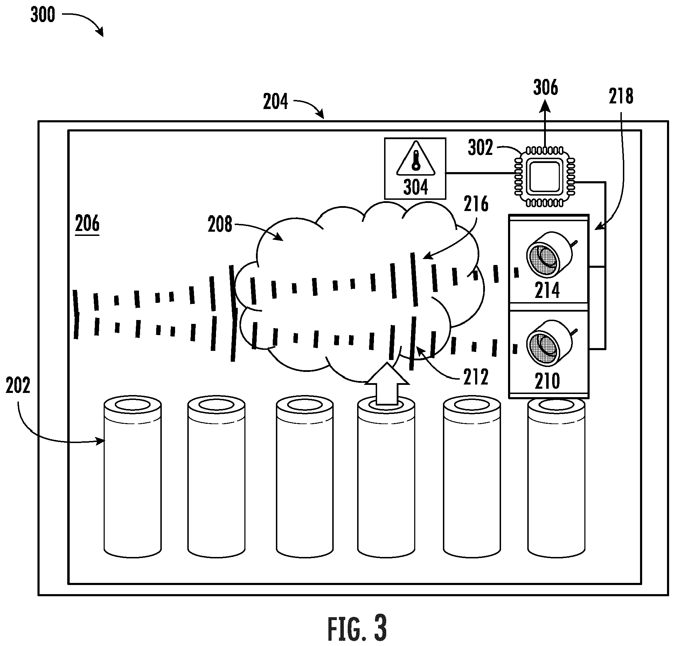

Referring now to FIG. 3, an example thermal runaway detection system 300 is provided. As shown in FIG. 3, the example thermal runaway detection system 300 includes a battery pack 204 defining an internal battery compartment 206, the internal battery compartment 206 containing a plurality of battery cells 202. As further depicted in FIG. 3, an acoustic sensor 218 comprising an acoustic transmitter 210 and an acoustic receiver 214 are positioned within the internal battery compartment 206, such that a transmitted acoustic signal 212 transmitted by the acoustic transmitter 210 is received by the acoustic receiver 214 as a received acoustic signal 216. In addition, as shown in FIG. 3, the acoustic sensor 218 is communicatively connected to a controller 302. The controller 302 is further communicatively connected to a temperature sensor 304 and a warning device 306. Additionally, as shown in FIG. 3, the internal battery compartment 206 includes one or more emitted gases 208 through which the transmitted acoustic signal 212 propagates.

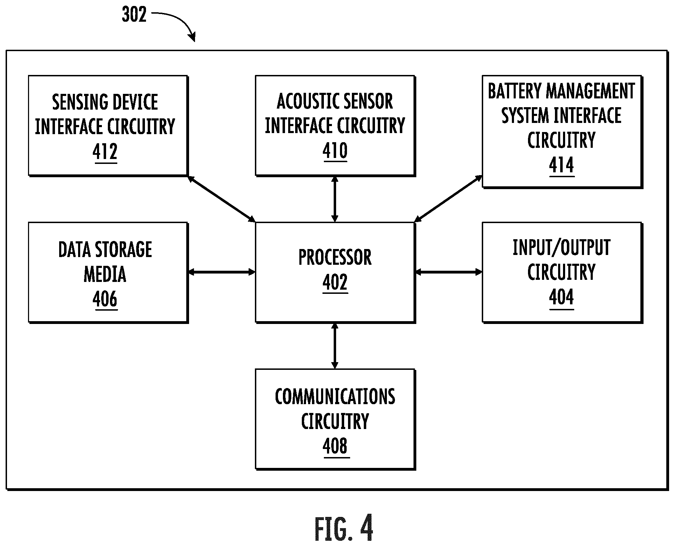

As depicted in FIG. 3, the example thermal runaway detection system 300 includes a controller 302 (e.g., microcontroller). A controller 302 may be any means such as a processor, device, microcontroller, or circuitry embodied in either hardware or a combination of hardware and software that is configured to receive input data from each of the connected sensors (e.g., one or more acoustic sensors 218, one or more sensing devices, etc.), determine the time of flight of the acoustic signal (e.g., transmitted acoustic signal 212), determine whether a hazardous condition exists based on a change in the time of flight of the acoustic signal, and issue a warning via a warning device 306. The controller may further consider measurements recorded by one or more sensing devices (e.g., temperature sensor 304) when determining the existence of a hazardous condition. The controller 302 may comprise a form as shown and described in relation to FIG. 4. While FIG. 4 provides an example controller 302, it is noted that the scope of the present disclosure is not limited to the example shown in FIG. 4.

As further depicted in FIG. 3, the example thermal runaway detection system 300 further includes a temperature sensor 304. A temperature sensor 304 may be any electrical, mechanical, and/or electro-mechanical device configured to generate a signal representing the temperature of the atmosphere immediately surrounding the temperature sensor 304. As depicted in FIG. 3, the example temperature sensor 304 is disposed in the internal battery compartment 206 to monitor the temperature within the battery pack 204. The temperature in the internal battery compartment 206 may affect the speed of sound within the internal battery compartment 206. For example, the speed of sound in air at room temperature (20°C) and pressure (1 atmosphere) is 343 meters per second. In contrast, the speed of sound in air at freezing point (0°C) and pressure (1 atmosphere) is 331 meters per second. The speed of sound in air may be determined by the equation:

$$c_{ms} = 331.3 \sqrt{1 + \frac{T_C}{273.15}}$$

where $c_{ms}$ is the speed of sound in meters per second and $T_C$ is the temperature of air in Celsius. Utilizing the above, or a similar equation, a thermal runaway detection system 300 may compensate for a change in time of flight of a transmitted acoustic signal 212 due to temperature.

While depicted as a temperature sensor 304 in FIG. 3, various other sensors may be used to compensate for changes to the physical environment of the internal battery compartment 206. For example, a pressure sensor may be utilized to determine the pressure within the internal battery compartment 206 and compensate for changes in time of flight of the transmitted acoustic signal 212 due to changes in temperature. Further, a humidity sensor may be utilized to determine the humidity within the internal battery compartment 206 and compensate for changes in time of flight of the transmitted acoustic signal 212 due to changes in humidity.

As further depicted in FIG. 3, the example thermal runaway detection system 300 may include a warning device 306. The warning device 306 may be any device, hardware, software, or other mechanism to which a controller 302 may transmit a warning or alert indicating the onset of thermal runaway. A warning device 306 may provide any indication, warning, message, auditory or visible indicator, or other similar mechanism of the thermal runaway condition of the battery cells 202. In some embodiments, warning device 306 may comprise a batter management system. In such an embodiment, the warning device (e.g., battery management system) may initiate a procedure to mitigate the hazardous condition, for example, disconnecting the load/charger and/or initiating measures to reduce the temperature of the battery cell or cells. In some embodiments, the warning device 306 may transmit a message to a graphical user interface or another user facing mechanism alerting a user of the hazardous battery cell condition. In some embodiments, the alert may prompt user action to mitigate the thermal runaway condition. In some embodiments, a light or series of lights and/or sound or series of sounds may be utilized as an alerting mechanism for the underlying hazardous battery condition.

FIG. 4 illustrates an example controller 302 in accordance with at least some example embodiments of the present disclosure. The controller 302 includes processor 402, input/output circuitry 404, data storage media 406, communications circuitry 408, acoustic sensor interface circuitry 410, sensing device interface circuitry 412, and warning device interface circuitry 414. In some embodiments, the controller 302 is configured, using one or more of the sets of circuitry 402, 404, 406, 408, 410, 412, and/or 414, to execute and perform the operations described herein.

Although components are described with respect to functional limitations, it should be understood that the particular implementations necessarily include the use of particular computing hardware. It should also be understood that in some embodiments certain of the components described herein include similar or common hardware. For example, two sets of circuitry may both leverage use of the same processor(s), network interface(s), storage medium(s), and/or the like, to perform their associated functions, such that duplicate hardware is not required for each set of circuitry. The user of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Alternatively or additionally, in some embodiments, other elements of the controller 302 provide or supplement the functionality of other particular sets of circuitry. For example, the processor 402 in some embodiments provides processing functionality to any of the sets of circuitry, the data storage media 406 provides storage functionality to any of the sets of circuitry, the communications circuitry 408 provides network interface functionality to any of the sets of circuitry, and/or the like.

In some embodiments, the processor 402 (and/or co-processor or any other processing circuitry assisting or otherwise associated with the processor) is/are in communication with the data storage media 406 via a bus for passing information among components of the controller 302. In some embodiments, for example, the data storage media 406 is non-transitory and may include, for example, one or more volatile and/or non-volatile memories. In other words, for example, the data storage media 406 in some embodiments includes or embodies an electronic storage device (e.g., a computer readable storage medium). In some embodiments, the data storage media 406 is configured to store information, data, content, applications, instructions, or the like, for enabling the controller 302 to carry out various functions in accordance with example embodiments of the present disclosure.

The processor 402 may be embodied in a number of different ways. For example, in some example embodiments, the processor 402 includes one or more processing devices configured to perform independently. Additionally or alternatively, in some embodiments, the processor 402 includes one or more processor(s) configured in tandem via a bus to enable independent execution of instructions, pipelining, and/or multithreading. The use of the terms "processor" and "processing circuitry" should be understood to include a single core processor, a multi-core processor, multiple processors internal to the controller 302, and/or one or more remote or "cloud" processor(s) external to the controller 302.

In an example embodiment, the processor 402 is configured to execute instructions stored in the data storage media 406 or otherwise accessible to the processor. Alternatively or additionally, the processor 402 in some embodiments is configured to execute hard-coded functionality. As such, whether configured by hardware or software methods, or by a combination thereof, the processor 402 represents an entity (e.g., physically embodied in circuitry) capable of performing operations according to an embodiment of the present disclosure while configured accordingly. Alternatively or additionally, as another example in some example embodiments, when the processor 402 is embodied as an executor of software instructions, the instructions specifically configure the processor 402 to perform the algorithms embodied in the specific operations described herein when such instructions are executed.

As one particular example embodiment, the processor 402 is configured to perform various operations associated with utilizing an acoustic sensor to detect a hazardous battery condition. In some embodiments, the processor 402 includes hardware, software, firmware, and/or a combination thereof, that causes an acoustic transmitter, disposed within an internal battery compartment of a battery case, to transmit an acoustic signal, wherein the internal battery compartment further comprises a battery cell. Additionally or alternatively, in some embodiments, the processor 402 includes hardware, software, firmware, and/or a combination thereof, that receives, from an acoustic receiver disposed within the internal battery compartment, an electrical output representing the acoustic signal. Additionally or alternatively, in some embodiments, the processor 402 includes hardware, software, firmware, and/or a combination thereof, that determines a time of flight of the acoustic signal. Additionally or alternatively, in some embodiments, the processor 402 includes hardware, software, firmware, and/or a combination thereof, that determines the hazardous battery condition based on a change in the time of flight of the acoustic signal.

In some embodiments, the controller 302 includes input/output circuitry 404 that provides output to the user and, in some embodiments, to receive an indication of a user input. In some embodiments, the input/output circuitry 404 is in communication with the processor 402 to provide such functionality. The input/output circuitry 404 may comprise one or more user interface(s) (e.g., user interface) and in some embodiments includes a display that comprises the interface(s) rendered as a web user interface, an application user interface, a user device, a backend system, or the like. The processor 402 and/or input/output circuitry 404 comprising the processor may be configured to control one or more functions of one or more user interface elements through computer program instructions (e.g., software and/or firmware) stored on a memory accessible to the processor (e.g., data storage media 406, and/or the like). In some embodiments, the input/output circuitry 404 includes or utilizes a user-facing application to provide input/output functionality to a client device and/or other display associated with a user.

In some embodiments, the controller 302 includes communications circuitry 408. The communications circuitry 408 includes any means such as a device or circuitry embodied in either hardware or a combination of hardware and software that is configured to receive and/or transmit data from/to a network and/or any other device, circuitry, or module in communication with the controller 302. In this regard, the communications circuitry 408 includes, for example in some embodiments, a network interface for enabling communications with a wired or wireless communications network. Additionally or alternatively in some embodiments, the communications circuitry 408 includes one or more network interface card(s), antenna(s), bus(es), switch(es), router(s), modem(s), and supporting hardware, firmware, and/or software, or any other device suitable for enabling communications via one or more communications network(s). Additionally or alternatively, the communications circuitry 408 includes circuitry for interacting with the antenna(s) and/or other hardware or software to cause transmission of signals via the antenna(s) or to handle receipt of signals received via the antenna(s). In some embodiments, the communications circuitry 408 enables transmission to and/or receipt of data from a client device in communication with the controller 302.

The acoustic sensor interface circuitry 410 includes hardware, software, firmware, and/or a combination thereof, that supports various functionality associated with configuring and communicating with an acoustic sensor (e.g., acoustic sensor 218). For example, in some embodiments, the acoustic sensor interface circuitry 410 includes hardware, software, firmware, and/or a combination thereof to communicate with the acoustic sensor according to an established protocol to provide appropriate configuration parameters to set and/or maintain the frequency and pattern of a transmitted acoustic signal (e.g., transmitted acoustic signal 212). Additionally or alternatively, in some embodiments, the acoustic sensor interface circuitry 410 includes hardware, software, firmware, and/or a combination thereof, that decodes the received acoustic signal (e.g., received acoustic signal 216) to correlate the received acoustic signal with the transmitted acoustic signal and determine the time of flight of the acoustic signal. In some embodiments, the acoustic sensor interface circuitry 410 includes a separate processor, specially configured field programmable gate array (FPGA), or a specially programmed application specific integrated circuit (ASIC).

The sensing device interface circuitry 412 includes hardware, software, firmware, and/or a combination thereof, that supports various functionality associated with configuring a sensing device (e.g., temperature sensor 304). For example, in some embodiments, the sensing device interface circuitry 412 includes hardware, software, firmware, and/or a combination thereof to communicate with the connected sensing device according to an established protocol to provide appropriate configuration parameters to receive data correlated with the temperature proximate the sensing device. Additionally or alternatively, in some embodiments, the sensing device interface circuitry 412 includes hardware, software, firmware, and/or a combination thereof, that retrieves measurement data from the sensing device and decodes the retrieved data to determine the physical properties of the environment surrounding the sensing device. Additionally or alternatively, in some embodiments, the sensing device interface circuitry 412 includes hardware, software, firmware, and/or a combination thereof, that configures the format and or frequency of the retrieved measurement data. In some embodiments, the sensing device interface circuitry 412 includes a separate processor, specially configured field programmable gate array (FPGA), or a specially programmed application specific integrated circuit (ASIC).

The warning device interface circuitry 414 includes hardware, software, firmware, and/or a combination thereof, that supports various functionality associated with configuring a warning device (e.g., warning device 306) to receive and perform actions based on the receipt of an alert or warning from the controller 302. For example, in some embodiments, the warning device interface circuitry 414 includes hardware, software, firmware, and/or a combination thereof to communicate with the warning device according to an established protocol to provide appropriate configuration parameters to set output actions based on the warning/alert received. In some embodiments, the warning device interface circuitry 414 includes a separate processor, specially configured field programmable gate array (FPGA), or a specially programmed application specific integrated circuit (ASIC).

Additionally or alternatively, in some embodiments, one or more of the sets of circuitry 402-414 are combinable. Additionally or alternatively, in some embodiments, one or more of the sets of circuitry perform some or all of the functionality described associated with another component. For example, in some embodiments, one or more sets of circuitry 402-414 are combined into a single module embodied in hardware, software, firmware, and/or a combination thereof. Similarly, in some embodiments, one or more of the sets of circuitry, for example acoustic sensor interface circuitry 410, sensing device interface circuitry 412, and/or warning device interface circuitry 414, is/are combined such that the processor 402 performs one or more of the operations described above with respect to each of these circuitry individually.

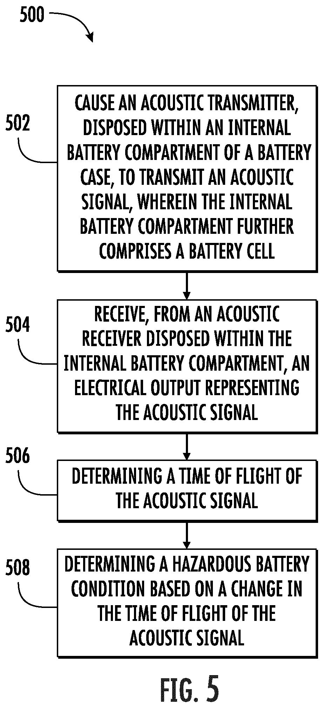

Referring now to FIG. 5, an example process 500 for detecting a hazardous condition in a battery pack is provided. At step 502, a controller (e.g., controller 302) causes an acoustic transmitter (e.g., acoustic transmitter 210), disposed within an internal battery compartment (e.g., internal battery compartment 206) of a battery case (e.g., battery pack 204), to transmit an acoustic signal (e.g., transmitted acoustic signal 212), wherein the internal battery compartment further comprises a battery cell (e.g., battery cell 202). In some embodiments, the acoustic signal may be an ultrasonic signal, for example, having a frequency at or above 20 kilohertz. In some embodiments, the acoustic signal may be generated having a distinguishable pattern such that the receipt of the acoustic signal may be correlated with the transmitted acoustic signal, for example, a short ultrasonic pulse. In some embodiments, the transmitted acoustic signal may be directed at a wall of the battery pack such that the transmitted acoustic signal reflects off the wall before being received by an acoustic receiver.

At step 504, the controller receives, from an acoustic receiver (e.g., acoustic receiver 214) disposed within the internal battery compartment, an electrical output representing the acoustic signal. As described herein, the acoustic receiver may be positioned to receive the received acoustic signal (e.g., received acoustic signal 216) from a direct line of sight transmission and/or after the transmitted acoustic signal has reflected off one or more walls of the battery pack. The acoustic receiver may further be configured to transmit the received acoustic signal via a communication connection to the processor. In some embodiments, the transmitted acoustic signal may travel through one or more emitted gases (e.g., emitted gases 208) before being received by the acoustic receiver. As such, the time of flight of the acoustic signal may have been altered from an expected time of flight.

At step 506, the controller determines a time of flight of the acoustic signal. In some embodiments, the controller may record and/or otherwise store the time of transmission of the transmitted acoustic signal. Upon reception of the received acoustic signal at the acoustic receiver, the controller may determine the time of flight of the acoustic signal by determining the difference between the time the acoustic signal was received at the acoustic receiver and the stored time of transmission correlated with the transmission time of the transmitted acoustic signal.

At step 508, the controller may determine the hazardous battery condition based on a change in the time of flight of the acoustic signal. As described herein, the change in time of flight of an acoustic signal may be an indicator of a hazardous battery condition. For example, the presence of certain gases (e.g., emitted gases 208) emitted from a battery cell during operation may be an indicator that the off-gas generation phase of thermal runaway has commenced. Depending on the density and concentration of these gases in the internal battery compartment, the speed of sound within the internal battery compartment may change. An increased speed of sound, for example due to the presence of hydrogen gas, may lead to a noticeable decrease in the time of flight of the transmitted acoustic signal.

In addition, the controller may utilize other factors in determining if the change in time of flight of the acoustic signal is due to the presence of emitted gases indicating the onset of thermal runaway. For example, a controller may retrieve from a sensing device (e.g., temperature sensor 304) a measurement, indicating a physical condition of the internal battery compartment, and adjust the change in the time of flight of the acoustic signal based on the measurement. The temperature, pressure, humidity, and other physical characteristics of the internal battery compartment may affect the time of flight of the acoustic signal. For example, in general, the acoustic signal travels slower in lower temperatures. However, in general, the acoustic signal travels faster in more humid environments. In some embodiments, the controller may adjust the expected time of flight of the acoustic signal based on measurements such as temperature and humidity. In such embodiments, the time of flight of the acoustic signal may be compared to the expected time of flight based on the physical conditions of the internal battery compartment. In addition, in some embodiments, changes to the time of flight may be ignored or minimized in an instance in which it is determined that the changes are the result of a change in the physical condition of the internal battery compartment.

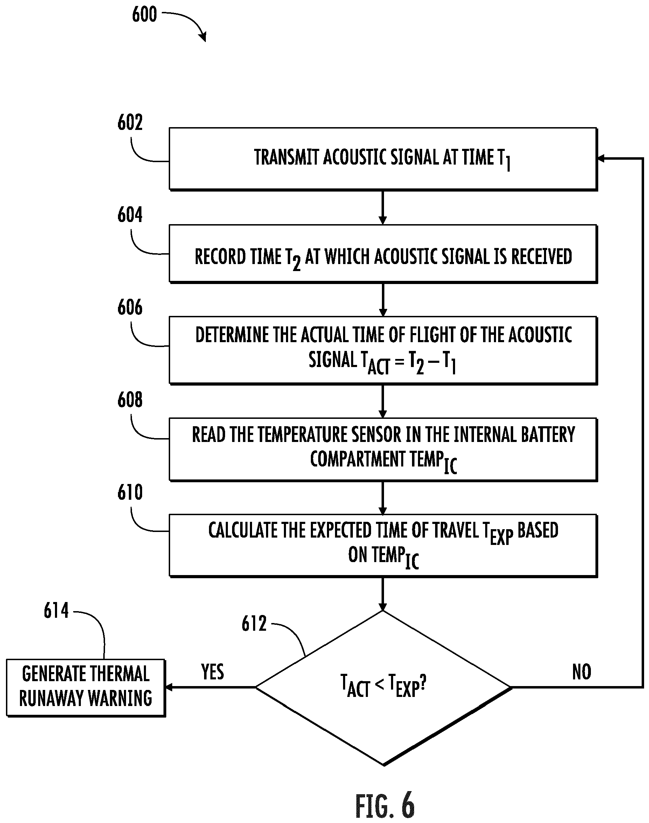

A variety of methods may be utilized to detect a change in the time of flight of the acoustic signal and detect a hazardous battery condition, such as thermal runaway, based on the change in the time of flight. Some example embodiments are further depicted in FIG. 6 - FIG. 8.

Referring now to FIG. 6, an example process 600 for determining a change in the time of flight of an acoustic signal is provided. At step 602, the controller (e.g., controller 302) causes an acoustic signal to be transmitted by an acoustic transmitter (e.g., acoustic transmitter 210) and records the time the signal is transmitted as $T_1$. In some embodiments, the acoustic signal may be directed at a wall of the battery pack (e.g., battery pack 204) such that the acoustic signal travels from the acoustic transmitter, towards a wall of the battery pack and reflects off the wall of the battery pack before returning to the acoustic receiver. In such an embodiment, the acoustic signal may encounter one or more gases (e.g., emitted gases 208) present in the internal battery compartment of the battery pack. As described herein, the presence of one or more gases, particularly hydrogen gas, may affect the speed of the acoustic signal as it travels through the internal battery compartment.

At step 604, the controller records the time at which the acoustic signal is received at an acoustic receiver (e.g., acoustic receiver 214) as time $T_2$. In some embodiments, the controller may correlate the received acoustic signal with the transmitted acoustic signal based on the frequency, shape, amplitude, and/or pattern of the received acoustic signal. The time the acoustic signal is received at the acoustic receiver may be recorded as time $T_2$.

At step 606, the controller determines the actual time of flight ($T_{ACT}$) of the acoustic signal by subtracting the transmission time ($T_1$) from the time of reception of the acoustic signal ($T2$).

At step 608, the controller reads the temperature sensor indicating the temperature of the internal battery compartment ($TEMP_{IC}$). In some embodiments, measurements of the internal battery compartment may also be retrieved from various other sensing devices, for example, humidity sensors and pressure sensors.

At step 610, the processor calculates the expected time of flight ($T_{EXP}$). The expected time of flight is the time a sound signal is expected to travel between transmission from an acoustic transmitter and reception at an acoustic receiver. The expected time of flight may vary based on the physical dimensions of the battery compartment, the positions of the acoustic transmitter and acoustic receiver, the frequency of the transmitted signal, the physical conditions of the internal battery compartment, and so on. For example, in some embodiments, the expected time of flight may be the calculated time it would take a sound signal to travel from the acoustic transmitter, reflect off a reflecting wall of the battery pack, and return to the acoustic receiver, with no obstructions and at a given temperature.

In some embodiments, the expected time of flight may be adjusted based on the temperature in the internal battery compartment $TEMP_{IC}$. In some embodiments, the expected time of flight ($T_{EXP}$) may be determined during a calibration of the thermal runaway detection system. For example, the expected time of flight ($T_{EXP}$) may depend on the acoustic sensor, the configuration of the transmitted acoustic signal, the physical dimensions of the battery pack, and other factors unique to each thermal runaway detection system. In some embodiments, the expected time of flight ($T_{EXP}$) may be recorded with an associated temperature. In order to compensate for the temperature in the internal battery compartment, the expected time of flight ($T_{EXP}$) may be updated ($T_{EXP\_UPDATE}$) during operation based on the temperature of the internal battery compartment ($TEMP_{IC}$) for example, utilizing an equation similar to:

$$T_{EXP\_UPDATE} = T_{EXP} \sqrt{1 + \frac{TEMP_{IC}}{273.15}}$$

where $T_{EXP\_UPDATE}$ is the expected speed of sound in meters per second based on the and $TEMP_{IC}$ which is the temperature of the internal battery compartment in Celsius. Similar calculations may be used to compensate for other physical characteristics of the internal battery compartment, for example, humidity.

At step 612, the actual time of flight ($T_{ACT}$) of the acoustic signal is compared to the expected time of flight of the acoustic signal ($T_{EXP}$ or $T_{EXP\_UPDATE}$). In an instance in which for example, the actual time of flight is less than the expected time of flight, the controller may determine one or more battery cells are approaching thermal runaway and at step 614, the processor may generate a thermal runaway warning. However, in an instance in which the actual time of flight is greater than or equal to the expected time of flight, the controller may determine that the battery cells are not entering into thermal runaway and the controller may return to step 602 to await transmission of another acoustic signal.

In some embodiments, a threshold or tolerance may be established allowing the actual time of flight to vary within that threshold or tolerance. For example, if the time of flight is 350 milliseconds, a threshold or tolerance of $\pm 10$ milliseconds may be established. Any variation of the time of flight within the threshold or tolerance may not indicate the onset of thermal runaway.

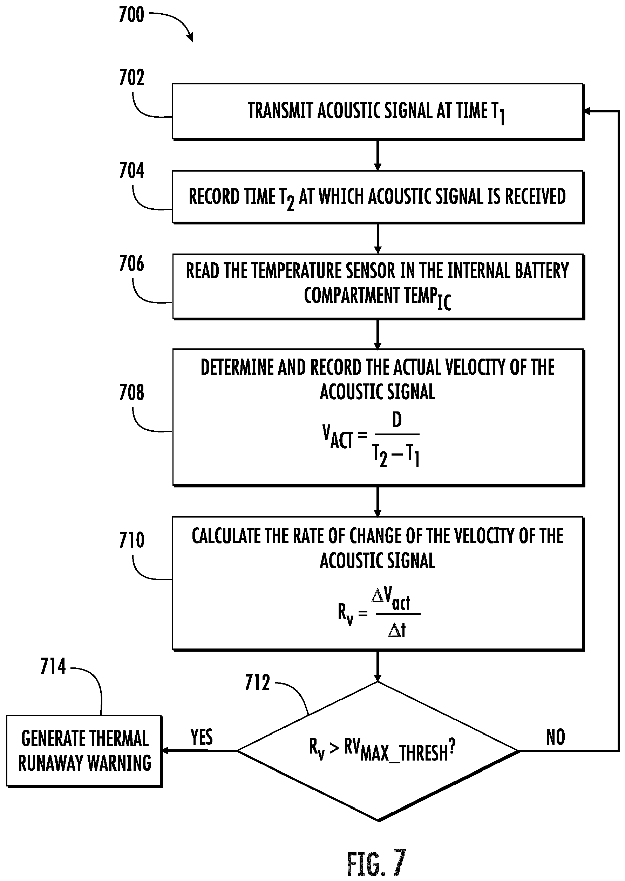

Referring now to FIG. 7, an example process 700 for detecting thermal runaway based on a change in the time of flight of an acoustic signal is provided. At step 702, the controller (e.g., controller 302) causes an acoustic signal to be transmitted by an acoustic transmitter (e.g., acoustic transmitter 210) and records the time the signal is transmitted as $T_1$. In some embodiments, the acoustic signal may encounter one or more gases (e.g., emitted gases 208) present in the internal battery compartment of the battery pack. As described herein, the presence of one or more gases, particularly hydrogen gas, may affect the speed of the acoustic signal as it travels through the internal battery compartment.

At step 704, the controller records the time at which the acoustic signal is received at an acoustic receiver (e.g., acoustic receiver 214) as time $T_2$. In some embodiments, the controller may correlate the received acoustic signal with the transmitted acoustic signal based on the frequency, shape, amplitude, and/or pattern of the received acoustic signal. The time the acoustic signal is received at the acoustic receiver may be recorded as time $T_2$.

At step 706, the controller reads the temperature sensor indicating the temperature of the internal battery compartment ($TEMP_{IC}$). In some embodiments, measurements indicating a physical condition of the internal battery compartment may also be retrieved from various other sensing devices, for example, humidity sensors and pressure sensors.

At step 708, the controller determines and records the actual velocity ($v_{ACT}$) of the acoustic signal by subtracting the transmission time ($T_1$) from the time of reception of the acoustic signal ($T_2$) and dividing the distance ($D$) between the acoustic receiver and the acoustic transmitter by the difference between the transmission time and the reception time, for example, using the following equation:

$$v_{ACT} = \frac{D}{T_2 - T_1}$$

where $v_{ACT}$ is the actual velocity of the acoustic signal, $D$ is the distance traveled by the acoustic signal between the acoustic transmitter and the acoustic receiver, $T_1$ is the time of transmission of the acoustic signal, and $T_2$ is the time of reception of the acoustic signal at the acoustic receiver. Although step 708 depicts calculating the velocity of the acoustic receiver, the present disclosure is not limited to calculating the velocity. Instead, in some embodiments, the time of flight of the acoustic signal may be determined and the rate of change of the time of flight may be used to detect the presence of an emitted gas in the internal battery compartment.

In some embodiments, after determining the actual velocity ($v_{ACT}$), or time of flight, of the acoustic signal the controller may record the actual velocity with an associated timestamp representing the time at which the actual velocity was recorded. By recording the actual velocity and associated time stamp, determinations regarding the rate of change of the velocity, or rate of change of the time of flight may be determined.

At step 710, the controller calculates the rate of change of the velocity of the acoustic signal ($R_v$). In an example embodiment, the controller may use an equation similar to the following:

$$R_v = \frac{\Delta v_{act}}{\Delta t}$$

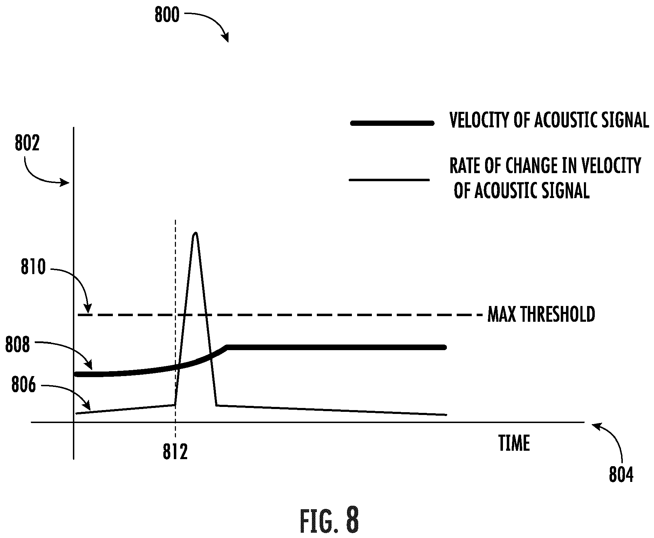

where $R_v$ is the rate of change of the velocity of the acoustic signal, $\Delta v_{act}$ is the change in actual velocity of the acoustic signal, and $\Delta t$ is the change in time. FIG. 8 further depicts the relationship between the actual velocity of the acoustic signal and the rate of change of the velocity of the acoustic signal.

Although step 710 depicts calculating a change in velocity of the acoustic receiver, the present disclosure is not limited to calculating the change in velocity. Instead, in some embodiments, the change in the time of flight of the acoustic signal may be determined and the rate of change of the time of flight may be used to detect the presence of an emitted gas in the internal battery compartment.

At step 712, the rate of change of the velocity of the acoustic signal ($R_v$) is compared to a pre-determined max rate of velocity change threshold ($RV_{max\_Thresh}$). The pre-determined max rate of velocity change threshold represents the maximum allowable rate of change of the velocity of the acoustic signal, above which, the controller may determine the onset of thermal runaway has commenced. As further shown in FIG. 8, the change in velocity due to the presence of an emitted gas (e.g., hydrogen gas) may be relatively small. However, the change in velocity may happen over a short period of time. Thus, the rate of change of the velocity of the acoustic signal may peak as the internal battery chamber begins to fill with the emitted gas. This peak in the rate of change of velocity may be detected by the controller, for example, if the rate of change of the velocity exceeds the pre-determined max rate of velocity change threshold. In an instance in which the rate of change of the velocity of the acoustic signal ($a_v$) exceeds the pre-determined max rate of velocity change threshold ($RV_{max\_Thresh}$), the controller may determine one or more battery cells are approaching thermal runaway and at step 714, the processor may generate a thermal runaway warning. However, in an instance in which the rate of change of the velocity of the acoustic signal does not exceed the pre-determined max rate of velocity change threshold, the controller may determine that the battery cells are not entering into thermal runaway and the controller may return to step 702 to await transmission of another acoustic signal.

Although step 712 depicts determining whether a rate of change of the velocity of the acoustic signal exceeds the pre-determined max rate of velocity change threshold, the present disclosure is not limited to utilizing the rate of change of the velocity of the acoustic signal to detect the presence of an emitted gas in the internal battery compartment. Instead, in some embodiments, the rate of change in the time of flight of the acoustic signal may be utilized to detect the presence of an emitted gas in the internal battery compartment. For example, the controller may detect an instance in which the rate of change of the time of flight has dropped below a pre-determined minimum threshold.

Referring now to FIG. 8, a graph 800 depicting an example relationship between the velocity of an acoustic signal (as represented by line 808) and the rate of change of the velocity of the acoustic signal (as represented by line 806). As shown in FIG. 8, the axis 804 represents time, while the axis 802 represents velocity for line 808, for example, meters per second, and the axis 802 represents rate of change in velocity, for example, meters per second-squared for line 806.

As shown in FIG. 8, the velocity of the acoustic signal, as represented by line 808, may increase a relatively small amount at time 812. However, because the change in velocity happens over a relatively short time period, the rate of change of the velocity of the acoustic signal, as represented by line 810, experiences a noticeable peak. In an instance in which the rate of change of the velocity of the acoustic signal (represented by line 806) exceeds a pre-determined max rate of velocity change threshold (represented by line 810), the controller may determine one or more battery cells have entered into the onset of thermal runaway.

Many modifications and other embodiments of the inventions set forth herein will come to mind to one skilled in the art to which these inventions pertain having the benefit of teachings presented in the foregoing descriptions and the associated drawings. Although the figures only show certain components of the apparatus and systems described herein, it is understood that various other components may be used in conjunction with the system. Therefore, it is to be understood that the inventions are not to be limited to the specific embodiments disclosed and that modifications and other embodiments are intended to be included within the scope of the appended claims. Moreover, the steps in the method described above may not necessarily occur in the order depicted in the accompanying diagrams, and in some cases one or more of the steps depicted may occur substantially simultaneously, or additional steps may be involved. Although specific terms are employed herein, they are used in a generic and descriptive sense only and not for purposes of limitation.

While various embodiments in accordance with the principles disclosed herein have been shown and described above, modifications thereof may be made by one skilled in the art without departing from the spirit and the teachings of the disclosure. The embodiments described herein are representative only and are not intended to be limiting. Many variations, combinations, and modifications are possible and are within the scope of the disclosure. The disclosed embodiments relate primarily to detecting the presence of hydrogen in an internal battery compartment for the purpose of determining if a battery pack is experiencing thermal runaway, however, one skilled in the art may recognize that such principles may be applied to other embodiments in which a gas may be detected in a confined space. Alternative embodiments that result from combining, integrating, and/or omitting features of the embodiment(s) are also within the scope of the disclosure. Accordingly, the scope of protection is not limited by the description set out above.

Additionally, the section headings used herein are provided for consistency with the suggestions under 37 C.F.R. 1.77 or to otherwise provide organizational cues. These headings shall not limit or characterize the invention(s) set out in any claims that may issue from this disclosure.

Use of broader terms such as "comprises," "includes," and "having" should be understood to provide support for narrower terms such as "consisting of," "consisting essentially of," and "comprised substantially of" Use of the terms "optionally," "may," "might," "possibly," and the like with respect to any element of an embodiment means that the element is not required, or alternatively, the element is required, both alternatives being within the scope of the embodiment(s). Also, references to examples are merely provided for illustrative purposes, and are not intended to be exclusive.

## Claims

1. A system for detecting a hazardous battery condition, the system comprising:

   a battery case defining an internal battery compartment comprising a battery cell;
   an acoustic transmitter configured to transmit an acoustic signal,
   wherein the acoustic transmitter is disposed within the internal battery compartment; and
   an acoustic receiver disposed within the internal battery compartment,
   wherein the acoustic receiver is positioned to receive the acoustic signal;
   wherein the hazardous battery condition is determined based on a change in a time of flight of the acoustic signal.

2. The system of Claim 1, wherein the time of flight of the acoustic signal is reduced due to the presence of an emitted gas from the battery cell in the internal battery compartment.

3. The system of Claim 2, wherein the emitted gas is hydrogen gas.

4. The system of Claim 1, wherein the hazardous battery condition is thermal runaway.

5. The system of Claim 1, wherein the hazardous battery condition is determined based on a rate of change of the time of flight of the acoustic signal.

6. The system of Claim 5, wherein the hazardous battery condition is determined in an instance in which the rate of change of the time of flight of the acoustic signal exceeds a pre-determined max rate of velocity change threshold.

7. The system of Claim 1, further comprising:
   a sensing device,

   wherein the sensing device is positioned within the internal battery compartment to measure a physical condition of the internal battery compartment, and
   wherein an expected time of flight of the acoustic signal is adjusted based on the physical condition of the internal battery compartment.

8. The system of Claim 7, wherein the sensing device comprises at least one of a temperature sensor and a humidity sensor.

9. The system of Claim 1, wherein the acoustic transmitter is positioned to transmit the acoustic signal at a reflecting wall of the internal battery compartment and the acoustic receiver is positioned to receive the acoustic signal once it has reflected off one or more walls of the internal battery compartment.

10. The system of Claim 1, further comprising:
    a microcontroller,

    wherein the microcontroller is electrically connected to the acoustic transmitter and the acoustic receiver, and
    wherein the microcontroller is configured to monitor the change in time of flight of the acoustic signal.

11. A method for detecting a hazardous battery condition, the method comprising:

    causing an acoustic transmitter, disposed within an internal battery compartment of a battery case, to transmit an acoustic signal,
    wherein the internal battery compartment further comprises a battery cell;
    receiving, from an acoustic receiver disposed within the internal battery compartment, an electrical output representing the acoustic signal;
determining a time of flight of the acoustic signal; and
determining the hazardous battery condition based on a change in the time of flight of the acoustic signal.

12. The method of Claim 11, wherein the time of flight of the acoustic signal is reduced due to the presence of an emitted gas from the battery cell in the internal battery compartment.

13. The method of Claim 11, wherein the hazardous battery condition is identified in an instance in which the rate of change of the time of flight of the acoustic signal exceeds a pre-determined max rate of velocity change threshold.

14. The method of Claim 11, further comprising:

retrieving from a sensing device a measurement, indicating a physical condition of the internal battery compartment,
wherein the sensing device comprises at least one of a temperature sensor and a humidity sensor; and
adjusting an expected time of flight of the acoustic signal based on the physical condition of the internal battery compartment.

15. The method of Claim 11, wherein the acoustic transmitter is positioned to transmit the acoustic signal at a reflecting wall of the internal battery compartment and the acoustic receiver is positioned to receive the acoustic signal once it has reflected off one or more walls of the internal battery compartment.

FIG. 1

EP 4 435 930 A2

FIG. 2

FIG. 3

302

FIG. 4

500

**502** CAUSE AN ACOUSTIC TRANSMITTER, DISPOSED WITHIN AN INTERNAL BATTERY COMPARTMENT OF A BATTERY CASE, TO TRANSMIT AN ACOUSTIC SIGNAL, WHEREIN THE INTERNAL BATTERY COMPARTMENT FURTHER COMPRISES A BATTERY CELL

**504** RECEIVE, FROM AN ACOUSTIC RECEIVER DISPOSED WITHIN THE INTERNAL BATTERY COMPARTMENT, AN ELECTRICAL OUTPUT REPRESENTING THE ACOUSTIC SIGNAL

**506** DETERMINING A TIME OF FLIGHT OF THE ACOUSTIC SIGNAL

**508** DETERMINING A HAZARDOUS BATTERY CONDITION BASED ON A CHANGE IN THE TIME OF FLIGHT OF THE ACOUSTIC SIGNAL

FIG. 5

600

602 — TRANSMIT ACOUSTIC SIGNAL AT TIME $T_1$

604 — RECORD TIME $T_2$ AT WHICH ACOUSTIC SIGNAL IS RECEIVED

606 — DETERMINE THE ACTUAL TIME OF FLIGHT OF THE ACOUSTIC SIGNAL $T_{ACT} = T_2 - T_1$

608 — READ THE TEMPERATURE SENSOR IN THE INTERNAL BATTERY COMPARTMENT $TEMP_{IC}$

610 — CALCULATE THE EXPECTED TIME OF TRAVEL $T_{EXP}$ BASED ON $TEMP_{IC}$

614 — GENERATE THERMAL RUNAWAY WARNING

612 — $T_{ACT} < T_{EXP}$?    YES    NO

FIG. 6

700

702 TRANSMIT ACOUSTIC SIGNAL AT TIME $T_1$

704 RECORD TIME $T_2$ AT WHICH ACOUSTIC SIGNAL IS RECEIVED

706 READ THE TEMPERATURE SENSOR IN THE INTERNAL BATTERY COMPARTMENT TEMP$_{IC}$

708 DETERMINE AND RECORD THE ACTUAL VELOCITY OF THE ACOUSTIC SIGNAL

$$V_{ACT} = \frac{D}{T_2 - T_1}$$

710 CALCULATE THE RATE OF CHANGE OF THE VELOCITY OF THE ACOUSTIC SIGNAL

$$R_v = \frac{\Delta V_{act}}{\Delta t}$$

714 GENERATE THERMAL RUNAWAY WARNING

712 $R_v > RV_{MAX\_THRESH}$?

YES

NO

FIG. 7

FIG. 8